# EUROPÄISCHE PATENTSCHRIFT

(11) **EP 0 740 426 B1**
(45) Veröffentlichungstag und Bekanntmachung des Hinweises auf die Patenterteilung: **26.10.2005**
(21) Anmeldenummer: 96105739.5
(22) Anmeldetag: 11.04.1996
(51) Int. Cl.: H04B 1/38, H04B 1/02, H05K 9/00

(54) **Gehäuse für ein Funkgerät**
Cabinet for wireless apparatus
Caisse pour un appareil radio

(30) Priorität: 24.04.1995 DE 19515010
(43) Veröffentlichungstag der Anmeldung: 30.10.1996
(73) Patentinhaber: SIEMENS AKTIENGESELLSCHAFT, 80333 München (DE)
(72) Erfinder: Heiss, Reinhold, Dipl.-Ing., 85232 Deutenhausen (DE); Schröder, Friedrich, Dipl.-Ing., 46487 Wesel (DE)

(56) Entgegenhaltungen:
- DE-A1- 3 203 566
- US-A- 4 629 595
- US-A- 5 357 570
- Patent Abstracts of Japan, Band 17, Nr. 91 (E-1324), 23 Februar 1993; & JP 04-284697 A (INOAC) 09 Oktober 1992,

## Beschreibung

Die Erfindung bezieht sich auf ein Gehäuse aus schalenförmigen, mit ihrer einander zugekehrten offenen Seite aufeinanderliegend angeordneten Teilen zur Aufnahme der Einrichtungen eines Funkgerätes.

In Funkgeräten, beispielsweise Funktelefonen, ist zum Schutz der Funk- und Logikbaugruppen gegen Störeinstrahlung und Störaussendung elektromagnetischer Strahlen eine Schirmung erforderlich. Zur Schirmung können in bekannter Weise additive Bauelemente, wie z.B. gelötete Schirmrahmen, Schirmbleche, metallisierte Kunststoffgehäuse, Druckgußgehäuse usw. verwendet werden. Diese Komponenten erhöhen das Gerätegewicht, vergrößern das Gerätevolumen, verteuern den Gerätepreis und verringern die Fertigungsqualität aufgrund zahlreicher schwieriger Montageprozesse. Auch die Verwendung metallisierter oder galvanisierter Kunststoffteile als Gehäuseteile ist entweder fertigungstechnisch aufwendig oder nicht ausreichend hinsichtlich der gewünschten Schirmwirkung.

Aus der DE 32 03 566 A1 ist ein Gehäuse mit Schirmfunktion bekannt. Gleichwohl sucht der Fachmann ständig nach Vereinfachungen in der Realisierung und nach Verbesserungen der Schirmwirkung.

Der Erfindung liegt die Aufgabe zugrunde, für Funkgeräte eine Lösung zur Schirmung anzugeben, die in ihrem Aufbau einfach ist und eine gute Schirmwirkung aufweist.

Diese Aufgabe wird mit einem Gehäuse der eingangs beschriebenen Art gemäß der Erfindung gelöst durch die Merkmale gemäss Anspruch 1.

Vorteilhafte Ausgestaltungen und Weiterbildungen des Erfindungsgegenstandes sind in den abhängigen Ansprüchen angegeben.

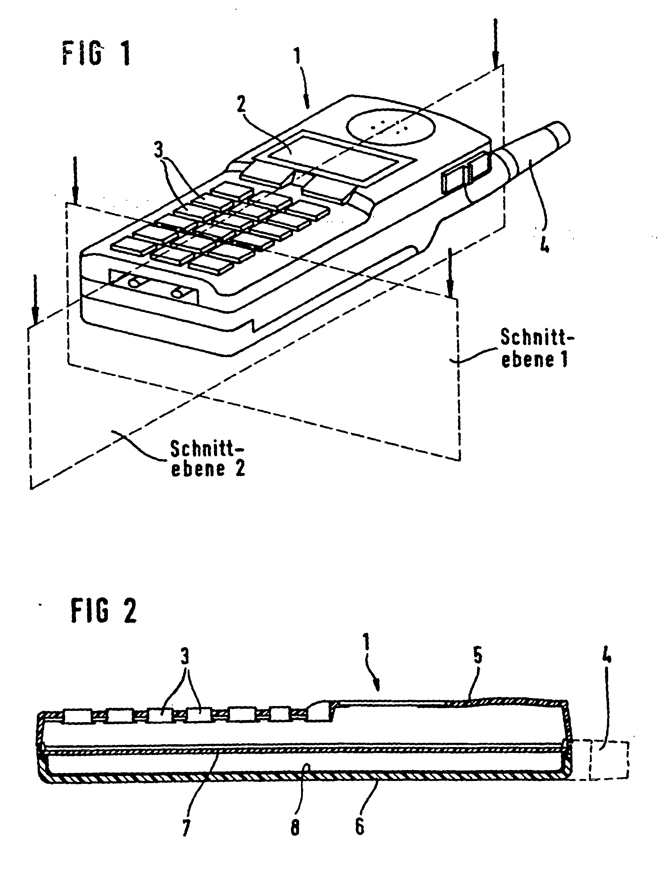

Nachstehend wird die Erfindung anhand eines in der Zeichnung dargestellten Ausführungsbeispiels erläutert, wobei die Figuren 1 bis 5 ein Funkgerät in perspektifischer Ansicht, in einem Längsschnitt und einem Querschnitt sowie in zwei Teildarstellungen zeigen.

Das Funkgerät 1 weist an seiner Oberseite ein Display 2 sowie ein Tastenfeld 3 auf und seitlich an der oberen Stirnseite eine Antenne 4. Das im Spritzgußverfahren hergestellte Gehäuse des Funktgerätes besteht aus einer Oberschale 5 und einer Unterschale 6, die mit ihrer einander zugekehrten offenen Seite aufeinanderliegend angeordnet sind. Die Oberschale weist Durchbrüche für das Display 2 sowie das Tastenfeld 3 auf. In der Ebene der aufeinanderliegenden Halbschalen 5, 6 ist eine Leiterplatte 7 zur Aufnahme von Bauelementen sowie der Funk- und Logikbaugruppen des Funkgerätes.

Erfindungsgemäß besteht das Gehäuse aus Gehäuse-Designteilen mit integrierter Schirmfunktion. Diese ist realisiert durch den Einsatz der in-mold-Technik. Hierbei werden während des Spritzvorganges sehr dünne Folien angespritzt, wobei die Folie durch das Spritzwerkzeug geführt wird. Zur Erreichung der Schirmwirkung werden elektrisch leitende Folien eingesetzt, die sich nach dem Spritzvorgang auf der Geräteinnenseite befinden und an der Verbindung zur Leiterplatte einen niedrigen Kontakt zu den Masseflächen der Leiterplatte herstellen. Im Ausführungsbeispiel ist die elektrisch leitende Folie 8 auf der Gehäuseunterschale 6 aufgebracht. Damit entsteht zwischen Leiterplatte 7 und Gehäuseunterschale 6 ein elektromagnetisch gut abgeschirmter Raum.

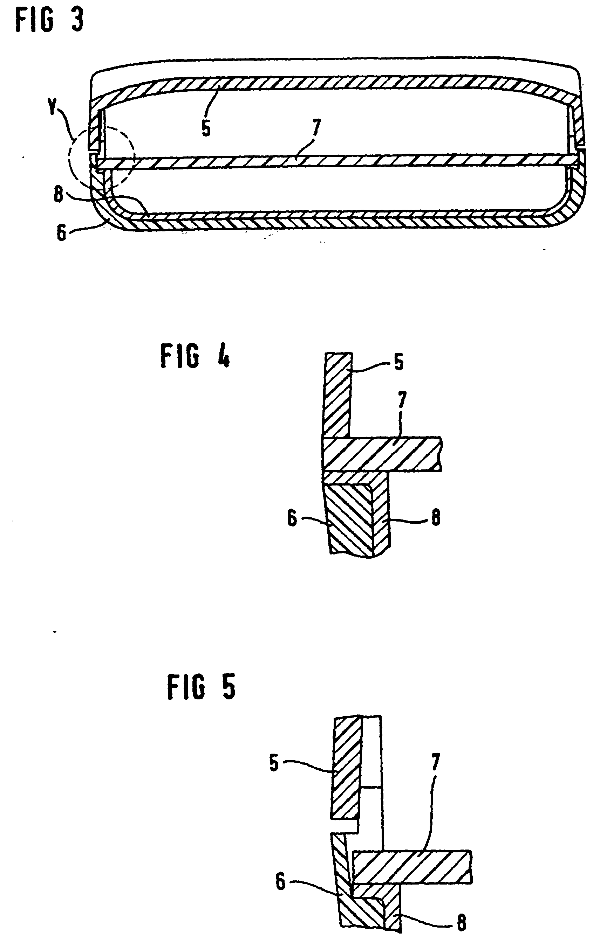

Die Figuren 4 und 5 zeigen in einer Detaildarstellung Einzelheiten im Auflagebereich der Leiterplatte auf dem Schalenrand. Dabei ist bei der Ausführung nach Figur 4 die elektrisch leitende Folie 6 bis an die Oberseite der Unterschale geführt und bildet an dieser Stelle Kontakt zu den Masseflächen der Leiterplatte 7. Bei der Ausführungsform nach Figur 5 ist die Innenseite der Unterschale im oberen Bereich abgestuft. Auf dieser Stufe liegt die Leiterplatte mit ihrer Unterseite auf der Folie 8 auf, die an der Verbindung zur Leiterplatte 7 einen niederohmigen Kontakt zu den Masseflächen der Leiterplatte 7 herstellt.

In einer besonderen Ausführung kann die Folie zugleich die Produktgraphik für das Gehäusedesign beinhalten. In diesem Fall muß sich die Folie an den Außenflächen der Teile befinden und mit einer geeigneten Kontaktierung für den Masseanschluß zur Leiterplatte versehen sein.

## Patentansprüche

1. Gehäuse aus schalenförmigen, mit ihrer einander zugekehrten offenen Seite aufeinanderliegend angeordneten Teilen zur Aufnahme der Einrichtungen eines Funkgerätes, **gekennzeichnet durch** Gehäuse-Design teile mit integrierter Schirmfunktion, bestehend aus Spritzgußteilen, wobei die Schirmfunktion **durch** Anspritzen von dünnen, elektrisch leitenden Folien während des Spritzvorgangs der Gehäuseteile erfolgt.

2. Gehäuse nach Anspruch 1, bei dem die Folie zugleich die Produktgrafik für das Gehäusedesign beinhaltet.

3. Gehäuse nach einem der vorhergehenden Ansprüche, wobei die Folie durch das Spritzwerkzeug geführt ist.

## Claims

1. Housing comprising shell-shaped components arranged one above the other with their open side facing one another, to accommodate the equipment of a radio device, **characterised by** housing design components with an integrated shielding function, consisting of injection-moulded components, the shielding function being produced by injecting thin, electrically conductive films during the injection process of the housing components.

2. Housing according to Claim 1, in which the film at the same time contains the product graphics for the housing design.

3. Housing according to one of the preceding claims, the film being routed by the injection tool.

## Revendications

1. Boîtier constitué de parties en forme de coques, disposées l'une au-dessus de l'autre avec leur côté ouvert adjacent l'un à l'autre pour loger les dispositifs d'un appareil radio, **caractérisé par** des parties formant modèle de boîtier avec fonction d'écran intégrée, se composant de parties moulées par injection, la fonction d'écran s'exerçant par l'injection de minces feuilles électriquement conductrices pendant le processus d'injection des parties du boîtier.

2. Boîtier selon la revendication 1, dans lequel la feuille comprend simultanément le graphisme du produit pour le modèle de boîtier.

3. Boîtier selon l'une des revendications précédentes, la feuille étant guidée par le moule à injection.
